# FASCICULE DE BREVET EUROPEEN

(11) **EP 1 322 490 B1**
(45) Date de publication et mention de la délivrance du brevet: **01.08.2012**
(21) Numéro de dépôt: 01974434.1
(22) Date de dépôt: 05.10.2001
(51) Int. Cl.: B60L 11/18

(54) **SYSTEME DE GESTION DE LA CHARGE D'UNE SOURCE D'ENERGIE ELECTRIQUE RECHARGEABLE, NOTAMMENT POUR VEHICULES DE TRANSPORT PUBLIC.**
STEUERUNG EINES WIEDERAUFLADBAREN ELEKTRISCHEN ENERGIETRÄGERS FÜR EIN ÖFFENTLICHES VERKEHRSMITTEL
SYSTEM FOR MANAGING THE LOAD OF A RECHARGEABLE ELECTRIC POWER SOURCE, IN PARTICULAR FOR PUBLIC TRANSPORT VEHICLES

(30) Priorité: 06.10.2000 FR 0012810
(43) Date de publication de la demande: 02.07.2003
(73) Titulaire: Renault Trucks, 69800 Saint Priest (FR)
(72) Inventeur: BAUDESSON, Anne, 78000 VERSAILLES (FR); DAYRE, Eric, F-27600 Saint-Aubin/Gaillon (FR)
(74) Mandataire: Colas, Jean-Pierre
(86) Numéro de dépôt international: PCT/FR2001/003067
(87) Numéro de publication internationale: WO 2002/028679

(56) Documents cités:
- DE-A- 2 405 198
- DE-U- 29 707 965
- US-A- 5 311 973
- US-A- 5 790 976

## Description

La présente invention est relative à un système de gestion de la charge d'une source d'énergie rechargeable prévue à bord d'au moins un véhicule à traction électrique, éventuellement de type hybride, ledit véhicule devant suivre un parcours le long duquel sont prévues des bornes de charge.

Par US 5 684 379, on connaît un tel système de gestion par lequel l'énergie électrique stockée dans la source d'énergie rechargeable d'un véhicule peut être gérée en fonction de plusieurs paramètres. Par exemple, la quantité de charge à fournir à la source d'énergie rechargeable est calculée en déterminant l'énergie qui va être absorbée par divers consommateurs branchés sur le réseau de bord, ou en prenant en compte d'autres paramètres tels que le niveau de charge de la source, l'heure, le jour et la date d'utilisation future du véhicule (données qui peuvent être introduites à l'aide d'un clavier), et également les distances à parcourir. Des moyens sont également prévus pour permettre la facturation de l'énergie délivrée à la source d'énergie à chaque recharge.

Cependant, ce procédé ne permet de gérer l'énergie chargée dans la source rechargeable en fonction ni des caractéristiques topographiques du parcours du véhicule (pentes, sinuosités), ni des conditions de circulation pendant qu'un parcours est effectué (encombrements nécessitant de fréquents démarrages, arrêts obligatoires d'un véhicule de livraison ou de service public etc.).

Or, pour certains types de véhicules tels que ceux qui sont astreints à effectuer un parcours fixe selon une rotation prédéterminée avec des arrêts préfixés, comme les véhicules de transport public ou les véhicules de livraison par exemple, l'efficacité de la gestion de l'énergie à bord, dépend pour une large part de la possibilité de connaître la quantité d'énergie que le véhicule devra dépenser pour, chaque fois après un arrêt, effectuer le tronçon suivant de son trajet. Par exemple, dans le cas des véhicules de transport public, il peut être avantageux de gérer au plus près le stockage de l'énergie en fonction de celle qui doit être dépensée pour que le véhicule progresse d'un arrêt situé sur son trajet à l'arrêt suivant.

Un autre système de gestion est connu du document US - A - 5 790 976 qui représente l'état de la technique le plus proche

L'invention a pour but de fournir un système de gestion permettant de répondre à ces exigences.

L'invention a donc pour objet un système de gestion du type défini en préambule qui est caractérisé en ce qu'il comprend en combinaison:
dans ledit véhicule:
   - des moyens de calcul pour, pendant l'accomplissement d'un trajet entre une borne amont et une borne aval situées sur ledit parcours, déterminer les besoins en énergie dudit véhicule pour qu'il puisse accomplir le tronçon de parcours menant de ladite borne aval vers la borne suivante,
   - des moyens pour engendrer un signal représentatif de la quantité d'énergie nécessaire pour satisfaire ces besoins,
   - des premiers moyens de communication pour communiquer ledit signal représentatif au moins à ladite borne aval,
   - des moyens pour localiser ledit véhicule par rapport auxdites bornes,
   - des moyens de mémorisation dans lesquels est déposée au moins une cartographie représentant les caractéristiques topographiques dudit parcours,
   - des moyens pour, en fonction de la localisation dudit véhicule, extraire desdits moyens de mémorisation les caractéristiques topographiques dudit tronçon de parcours, et
   - lesdits moyens de calcul déterminant lesdits besoins en énergie en fonction des caractéristiques topographiques dudit tronçon;
et dans chacune desdites bornes:
   - des seconds moyens de communication pour recevoir ledit signal représentatif et
des moyens pour, en réponse à ce signal représentatif, envoyer l'énergie de charge correspondante vers ladite source rechargeable dans ledit véhicule.

Grâce à ces caractéristiques, le système de gestion selon l'invention peut déterminer, pour chacun des tronçons du parcours, la quantité strictement nécessaire d'énergie devant être stockée dans la source d'énergie rechargeable, tout en tenant compte notamment des caractéristiques topographiques du parcours qui sont extraites de la mémoire à l'aide des données de localisation du véhicule. Il en résulte une optimisation du temps de recharge, celle-ci pouvant intervenir avec une intensité du courant de recharge déterminée au plus juste. La durée de vie de la source d'énergie rechargeable s'en trouve ainsi prolongée. De plus, comme la source d'énergie rechargeable ne doit contenir que la quantité d'énergie nécessaire pour couvrir un tronçon du parcours (plus de préférence une réserve de sécurité correspondant par exemple à l'énergie nécessaire pour couvrir quelques tronçons), sa capacité et par conséquent sa masse peuvent être réduites au strict minimum.

Suivant d'autres particularités avantageuses de l'invention:
- lesdits moyens de mémorisation contiennent des données relatives au tracé et/ou au relief et/ou à la longueur de chacun des tronçons de parcours s'étendant entre chacune desdites bornes et la borne suivante;
- le système comprend également, à bord dudit véhicule, des moyens pour déterminer la charge actuelle présente dans ladite source d'énergie rechargeable, lesdits moyens de calcul engendrant ledit signal représentatif en fonction de la différence entre la quantité d'énergie nécessaire pour satisfaire lesdits besoins en énergie et la quantité d'énergie présente dans ladite source d'énergie rechargeable;
- le système comprend également des moyens pour relever une plage de valeurs de charge correspondant au meilleur fonctionnement de ladite source d'énergie rechargeable et lesdits moyens de calcul déterminent ledit signal représentatif en fonction de ladite plage de valeurs de charge;
- lesdits moyens de localisation comprennent un dispositif de localisation par satellite de type GPS ou ils sont agencés pour localiser ledit véhicule à partir des coordonnées topographiques desdites bornes;
- le système comprend à bord dudit véhicule, un dispositif d'affichage agencé pour afficher la quantité totale d'énergie présente dans ladite source d'énergie, et/ou la quantité d'énergie nécessaire pour atteindre ladite borne aval et/ou la quantité d'énergie nécessaire pour atteindre ladite borne suivante;
- ledit dispositif d'affichage est également agencé pour afficher, lors de la recharge de ladite source d'énergie, le temps restant à s'écouler avant la fin de la recharge;
- ledit dispositif d'affichage est également agencé pour afficher l'état de recharge de ladite source d'énergie et/ou une autorisation de démarrage après achèvement de la recharge;
- le système comprend également, situés dans une station centrale gestionnaire dudit parcours, des moyens pour analyser la circulation sur ledit parcours et pour envoyer les données correspondantes audit véhicule, et lesdits moyens de calcul sont également agencés pour déterminer lesdits besoins en énergie en fonction desdites données de circulation.

Les caractéristiques et avantages de la présente invention apparaîtront au cours de la description qui va suivre, donnée uniquement à titre d'exemple et faite en se référant aux dessins annexés sur lesquels:
- la figure 1 est une représentation schématique d'un exemple de parcours pouvant être couvert par un véhicule dans lequel est mis en oeuvre le système de gestion selon l'invention;
- la figure 2 montre par une vue en perspective schématique, un véhicule qui s'apprête à s'arrêter à une borne de charge, et les composants essentiels d'un système de gestion de charge suivant l'invention, se trouvant dans ces deux entités;
- la figure 3 est un schéma fonctionnel du système de gestion de charge selon l'invention;
- la figure 4 est un organigramme illustrant le fonctionnement du système de gestion selon l'invention; et
- la figure 5 montre l'un des aspects possibles d'un dispositif d'affichage pouvant être utilisé dans le système de gestion selon l'invention, pour informer le conducteur du véhicule du déroulement du processus de charge de la source d'énergie rechargeable et de l'état de charge de cette dernière.

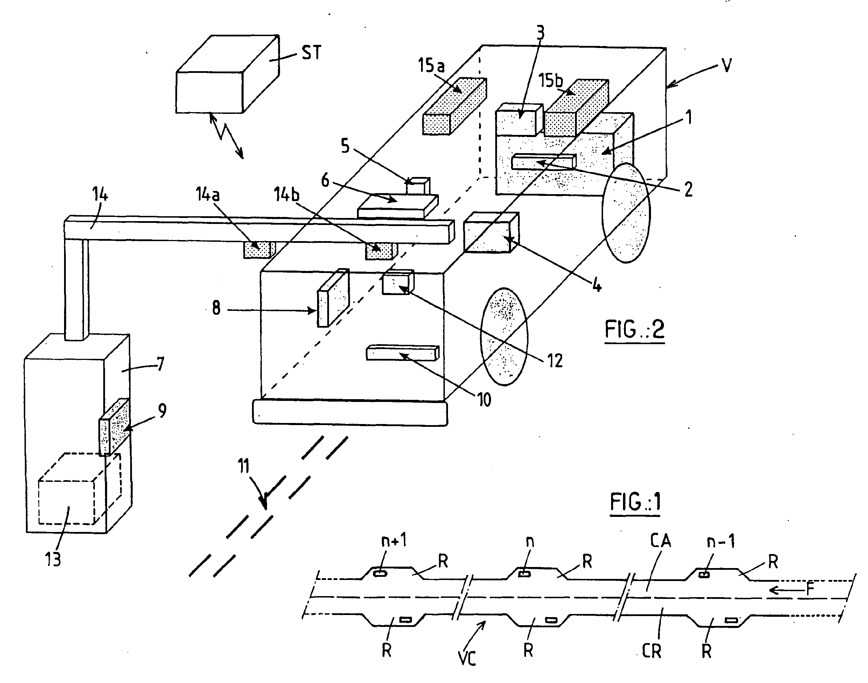

Sur la figure 1, on a représenté schématiquement une voie de circulation VC avec une chaussée aller CA et une chaussée retour CR sur lesquelles se déplacent des véhicules d'une ligne de transport public, cas qui est choisi à titre d'exemple dans la description qui va suivre du système de gestion d'énergie suivant l'invention. Les chaussées aller et retour CA et CR sont jalonnées de refuges R dans lesquels sont prévues des bornes de charge, telles que les bornes .. n-1, n, n+1 .. correspondant au sens de circulation F.

Dans le cas décrit, il s'agit de véhicules de transport public à traction électrique, éventuellement de type hybride, tels que le véhicule V de la figure 2, alimentés par une source d'énergie électrique rechargeable 1 qui fournit l'énergie de traction à un ou plusieurs moteurs (non représentés) couplés aux roues du véhicule. Le système de traction du véhicule V peut être classique et n'est donc pas décrit en détail ici. Toutefois, le système de gestion selon l'invention peut s'appliquer à tout autre type de véhicule ou flotte de véhicules (véhicules de livraison par exemple) devant effectuer des parcours jalonnés d'arrêts.

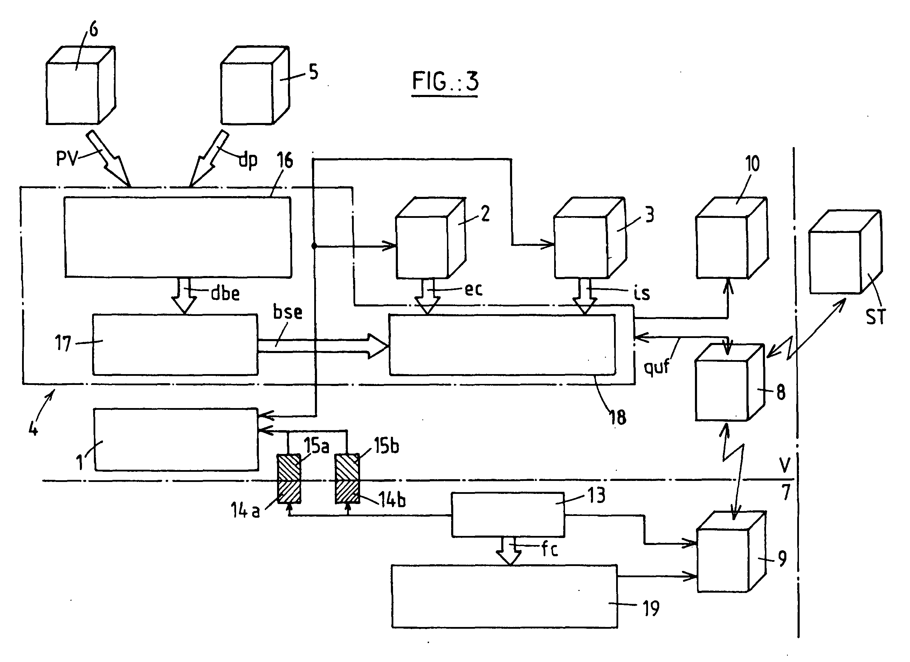

Sur la figure 2, on a représenté très schématiquement les unités fonctionnelles essentielles du système de gestion se trouvant dans le véhicule V et à un arrêt de celui-ci le long du parcours qu'il doit effectuer. Il est à noter que les emplacements de ces unités fonctionnelles dans le véhicule V ne sont pas déterminants et la figure n'est pas représentative à cet égard. De même, les interconnexions de ces unités, qu'elles soient mécaniques ou électriques n'ont pas été représentées pour plus de clarté, l'homme de métier étant à même de les réaliser à l'aide des explications données dans la présente description, notamment à propos de la figure 3.

Ceci étant, la source d'énergie électrique rechargeable 1 peut être une batterie d'accumulateurs classique, éventuellement associée à une batterie de supercapacités permettant une recharge rapide en énergie du véhicule V avec une intensité de courant élevée. Par exemple, on peut appliquer à cet effet les concepts décrits dans la demande de brevet français déposée le 19 juin 2000 et publié sous le numéro FR-A-281078 au nom de la Demanderesse.

La source d'énergie rechargeable 1 est associée à un dispositif de gestion de charge 2 destiné notamment à commander l'intensité du courant de charge. Pour cela, il peut délivrer notamment un signal d'état de charge ec (voir aussi la figure 3) représentatif de l'état de charge de la source d'énergie 1. Par ailleurs, une unité de mémoire 3 associée à la source d'énergie 1 contient des informations relatives aux divers éléments d'accumulation composant la source, telles que leur type, leur tension de charge, les niveaux de charge correspondant à leur fonctionnement optimal et les niveaux de charge limites à ne pas franchir. Les signaux représentatifs de ces diverses informations sont repérés globalement par le sigle is.

Un calculateur 4 du véhicule est prévu pour déterminer la quantité d'énergie à fournir au véhicule V à chaque recharge de la source d'énergie 1. Il est associé à une mémoire de parcours 5 dans laquelle sont stockées des données topographiques de parcours dp concernant le parcours à effectuer par le véhicule V sur la voie de circulation VC. Ces données sont présentes dans la mémoire 5 sous la forme d'une ou de plusieurs cartographies dans lesquelles sont déposées les informations concernant notamment les longueurs des tronçons du parcours à couvrir entre les bornes de charge, le relief du parcours et les besoins en énergie du véhicule pour couvrir ces tronçons. Il est à noter que le contenu de la mémoire 5 peut avantageusement être formé par l'intermédiaire d'un processus d'apprentissage pendant lequel le véhicule effectue le parcours assigné et toutes les données topographiques et éventuellement énergétiques sont relevées.

Le véhicule V comprend également un dispositif de localisation 6 capable de fournir un signal de position pv du véhicule représentatif de sa position topographique (voir également la figure 3). Il peut s'agir d'un système de localisation par satellite de type GPS ou d'un système capable, à partir d'un signal émis par une station fixe ST où est située l'entité gestionnaire du véhicule par exemple, de se localiser par rapport à cette station.

Le signal de localisation pv peut également être fourni à chaque passage par les bornes ...n-1, n, n+1..., (repérée par la référence 7 sur la figure 2), chaque borne servant alors de repère topographique. A cet effet, notamment, le véhicule V et chaque borne 7 comportent un émetteur/récepteur 8, respectivement 9.

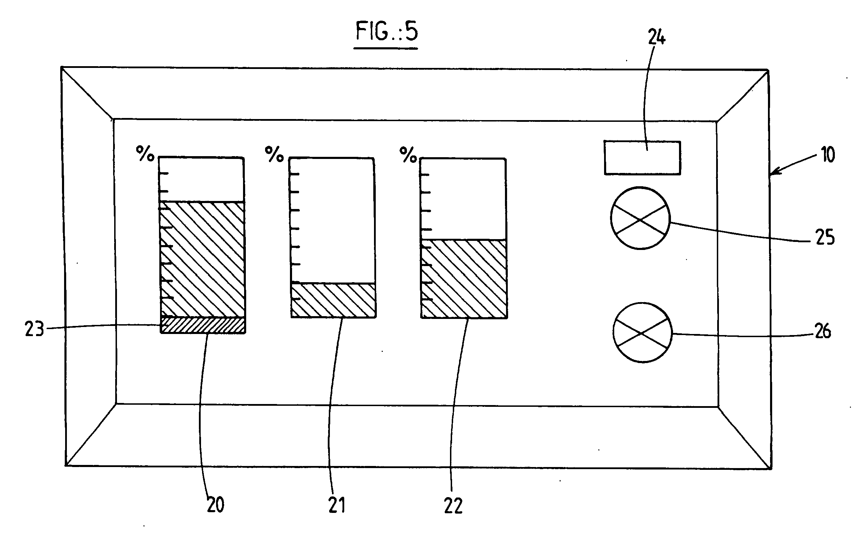

Le tableau de bord du véhicule V est équipé d'un dispositif d'affichage 10 sur lequel apparaissent toutes les données importantes relatives à la gestion de l'énergie du véhicule pendant qu'un trajet est parcouru. Ce dispositif d'affichage 10 sera décrit en détail à propos de la figure 5.

Le système de gestion selon l'invention peut être utilisé avec des véhicules V dont le trajet peut être guidé partiellement ou totalement par un repérage fixe 11 disposé le long de son trajet. Dans ce cas, le véhicule est également équipé d'une caméra ou autre capteur analogue 12 capable de lire l'information correspondante et de la transmettre au calculateur de gestion 4 du véhicule afin que celui-ci puisse être conduit automatiquement. Ce guidage automatique peut être particulièrement utile pendant les phases d'approche et de départ d'un refuge R.

Dans le mode réalisation décrit, on suppose que l'énergie électrique à stocker dans le véhicule V est fournie par des bornes telles que la borne 7 qui est représentative des bornes ...n-1, n, n+1... de la figure 1 qui ont toutes une structure identique. A cet effet, chaque borne 7 est équipée d'une unité de charge électrique 13, alimentée par le réseau électrique public par exemple, et capable d'envoyer un courant de charge dans une potence 14. Cette dernière comprend deux contacteurs 14a et 14b qui, lorsque le véhicule V est convenablement positionné par rapport à une borne 7, viennent en contact avec des patins 15a et 15b respectifs situés sur le toit du véhicule V et raccordés à la source d'énergie rechargeable 1. La demande de brevet précitée décrit en détail un processus préféré de transfert de l'énergie entre la borne 7 et le véhicule V. Cependant, l'invention n'est pas limitée à ce type de transfert d'énergie particulier. D'autres types de transferts (par induction, par exemple à partir d'une boucle enterrée) peuvent être envisagés.

Sur la figure 3, on a regroupé schématiquement autour du calculateur 4, les ensembles et unités qui viennent d'être décrits à propos de la figure 2. Le calculateur 4 est agencé pour fournir à sa sortie un signal quf représentatif de la quantité d'énergie devant être fournie au véhicule V pour que ce dernier, en ayant dépensé une quantité prédéterminée d'énergie contenue dans la source 1 depuis qu'il a quitté la borne n-1, puisse atteindre la borne suivante n+1, après avoir été rechargé à la borne n.

A cet effet, juste avant d'atteindre la borne n, au cours d'une opération d'acquisition de données 16, le calculateur 4 extrait de la mémoire 5 des données de parcours dp relatives au tronçon à couvrir entre les bornes n et n+1 en utilisant comme pointeur de la mémoire 5 les données topographiques de position pv fournies par le dispositif de localisation 6. Puis, au cours d'une opération de calcul 17, le calculateur 4 détermine les besoins en énergie bse du véhicule V requis pour couvrir ce futur tronçon. Le paramètre "besoins en énergie" bse est transformé par le calculateur 4 au cours d'une opération de calcul 18 pour former le signal quf représentatif de la quantité d'énergie devant être stockée dans la source 1 par la borne n, le calculateur 4 prenant alors en compte les paramètres ec et is qui lui sont fournis par le dispositif de gestion de charge 2 et la mémoire 3.

Le signal quf qui vient d'être élaboré est appliqué à l'émetteur/récepteur 8 du véhicule V et transmis à l'émetteur/récepteur 9 de la borne n. Celle-ci déclenche alors la recharge de la source d'énergie 1 par le dispositif de charge 13 dès qu'il a été constaté dans la borne n que le véhicule s'est positionné correctement par rapport à celle-ci. Lorsque la quantité d'énergie nécessaire pour la recharge est transférée, un signal de fin de charge fc est délivré à un dispositif 19 de commande de fin de charge qui transmet cette information par l'intermédiaire des émetteurs/récepteurs 8 et 9 au calculateur 4. Le véhicule peut alors quitter la borne n pour effectuer le prochain tronçon de parcours jusqu'à la borne n+1.

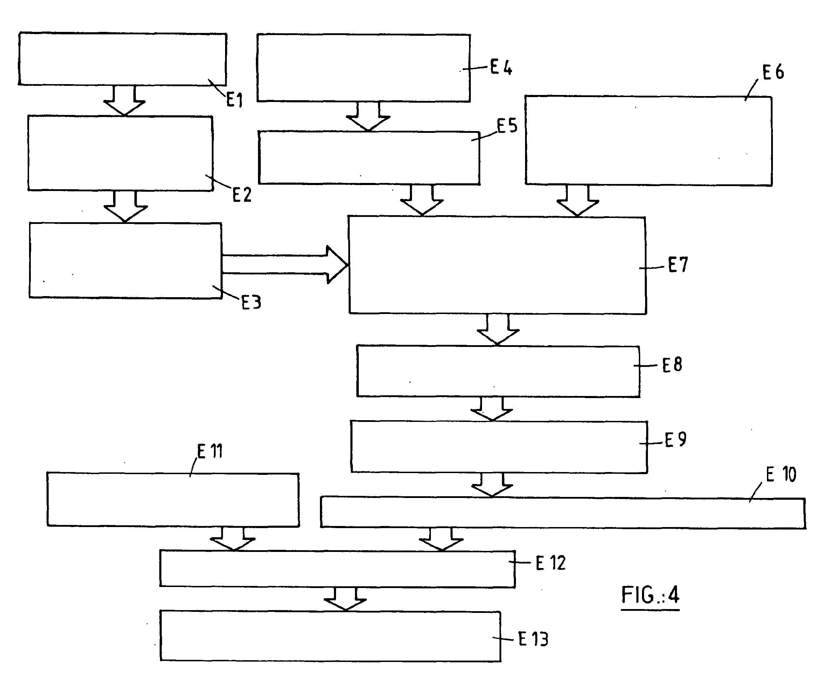

La figure 4 est un organigramme illustrant les étapes essentielles du processus de recharge de la source d'énergie 1 assuré par le système de gestion qui vient d'être décrit.

Juste avant l'arrêt à la borne n, au cours d'une étape E1, les données de position pv=(pvx, pvy) du véhicule V sont fournies par le dispositif de localisation pendant que simultanément sont reçues de la station centrale ST des données concernant la circulation sur le tronçon entre la borne n et la borne n+1. pvx et pvy sont respectivement les coordonnées en longitude et en latitude du véhicule V.

Les données recueillies à l'étape E1 sont utilisées pour, au cours d'une étape E2, extraire de la mémoire 5 les données de parcours dp telles que notamment la longueur du tronçon à parcourir jusqu'à la borne n+1 et le relief de ce tronçon.

Les données rassemblées au cours de l'étape E2 sont utilisées par le calculateur 4 pour déterminer les besoins futurs en énergie du véhicule au cours d'une opération de calcul E3, selon la relation bse=f(pvx, pvy).

L'état de charge de la source d'énergie 1 est mesuré pendant l'étape E4; il est exprimé par exemple en pourcentage de la charge totale potentielle de cette source. Au cours d'une étape E5, cette donnée permet de calculer les réserves d'énergie contenues dans la source d'énergie 1 juste avant la recharge. Au cours de l'étape E6, les informations concernant la source 1 sont prises en compte, telles que notamment sa plage de meilleur fonctionnement selon la relation a%<C<b%, qui signifie que la charge optimale de la source 1 doit se situer de préférence entre deux niveaux de charge a et b.

A l'aide des données obtenues pendant les étapes E3, E5 et E6, le calculateur 4, au cours d'une étape E7, calcule la quantité d'énergie quf, en faisant la différence entre les données déterminées pendant les étapes E3 et E5, et en prenant en compte les limites de charge définies pendant l'étape E6.

Au cours de l'étape E8, le véhicule V est guidé, de préférence automatiquement, vers la position d'arrêt à la borne n à l'aide des repères 11 et du capteur 12 et positionné convenablement par rapport à cette borne. Ces opérations font l'objet d'une vérification au cours de l'étape E9, une autorisation de charge étant délivrée dès que les conditions de charge et notamment la continuité électrique entre les contacts 14a et 14b et les patins 15a et 15b est réalisée.

Dans la borne n, l'autorisation de charge déclenche l'étape E10 au cours de laquelle, en fonction du signal quf, le temps de recharge est déterminé, puis la recharge est effectuée à partir de cette borne.

L'étape E11 consiste à contrôler la quantité d'énergie fournie au véhicule, quantité qui est comparée au cours d'une étape E12 à la quantité d'énergie à fournir puf. Dès que l'opération de comparaison constate l'égalité entre les deux valeurs, un signal de fin de charge est engendré au cours d'une étape E13 et un signal d'autorisation de départ du véhicule V est délivré vers celui-ci par l'intermédiaire des émetteurs/récepteurs 8 et 9. Dès lors, le véhicule V peut quitter l'arrêt et effectuer le trajet vers la borne n+1.

Dans le cas d'un véhicule de transport public, le temps de recharge peut être exploité pour faire monter et descendre les voyageurs.

La figure 5 illustre un exemple de réalisation du dispositif d'affichage 10 à disposition du conducteur du véhicule V, de préférence sur le tableau de bord, pour contrôler les données de gestion de la charge de la source d'énergie rechargeable 1.

Le dispositif d'affichage 10 est commandé par le calculateur 4 qui peut lui fournir les signaux de mesure et d'avertissement nécessaires. Il comprend trois indicateurs 20, 21 et 22 qui, de préférence à l'aide d'une échelle en pourcentages, représentent respectivement le contenu en énergie de la source rechargeable 10, les besoins en énergie nécessaires pour atteindre la borne n+1 et ceux nécessaires pour atteindre la borne suivante n+2 (non représentée). L'indicateur 20 montre également en 23 l'énergie disponible en réserve dans la source rechargeable 1, réserve qu'il ne convient d'entamer qu'exceptionnellement, par exemple si la circulation ne permet pas d'atteindre suffisamment tôt l'arrêt suivant.

Le dispositif d'affichage 10 comprend également un compteur de temps à rebours 24 qui affiche la durée devant encore s'écouler avant la fin de la recharge. Une lampe témoin 25 est un témoin de charge et une lampe témoin 26 peut indiquer la fin du processus de recharge et l'autorisation de quitter l'arrêt. Bien entendu, les lampes témoin 26 et 27 peuvent être utilisées simultanément à des signaux sonores ou être remplacées par ceux-ci. Par ailleurs, il est possible de prévoir pour le conducteur la possibilité de ne pas recharger la source d'énergie 1 systématiquement à chaque borne de charge. En effet, si le contenu en énergie est suffisant pour couvrir la distance entre une borne n-1 et une borne n+1, la borne n pourra être sautée. Dans ce cas, la lampe témoin d'autorisation de départ 26 peut être amenée à clignoter. De même, la lampe témoin 25 peut être munie d'une fonction de clignotement signifiant que le calculateur 4 a décelé un contenu en énergie trop faible pour qu'une borne puisse être sautée. Dans ce cas, le conducteur aura l'obligation de procéder à une recharge à l'arrêt immédiatement suivant du parcours.

## Revendications

1. Système de gestion de la charge d'une source d'énergie rechargeable (1) prévue a bord d'au moins un véhicule à traction électrique (V), éventuellement de type hybride, ledit véhicule devant suivre un parcours prédéterminé (VC) le long duquel sont prévues des bornes de charge (...n-1, n, n+1...).
ledit système étant **caractérisé en ce qu'**il comprend en combinaison :
dans ledit véhicule (V) :
- des moyens de calcul (4, 17) pour, pendant l'accomplissement d'un trajet entre une borne amont (n-1) et une borne aval (n) situées sur ledit parcours (VC), déterminer les besoins en énergie (bse) dudit véhicule (V) pour qu'il puisse accomplir le 1 tronçon de parcours menant de ladite borne aval (n) vers la borne suivante (n+1),
- des moyens pour engendrer un signal (quf) représentatif de la quantité d'énergie nécessaire pour satisfaire ces besoins,
- des premiers moyens de communication (8) pour communiquer ledit signal représentatif (quf) au moins à ladite borne aval (n),
- des moyens (6) pour localiser ledit véhicule par rapport auxdites bornes (n-1, n,n+1)
- des moyens de mémorisation (5) dans lesquels est déposée au moins une cartographie représentant les caractéristiques topographiques dudit parcours,
- des moyens (4, 16) pour, en fonction de la localisation dudit véhicule, extraire desdits moyens de mémorisation (5) les caractéristiques topographiques dudit tronçon de parcours, et
- lesdits moyens de calcul (4;17) déterminant lesdits besoins en énergie (bse) en fonction des caractéristiques topographiques dudit tronçon;
et dans chacune desdites bornes (n-1, n, n+1):
- des seconds moyens de communication (9) pour recevoir ledit signal représentatif (quf) et
des moyens (13) pour, en réponse à ce signal représentatif, envoyer l'énergie de charge correspondante vers ladite source rechargeable (1) dans ledit véhicule (V).

2. Système de gestion suivant la revendication 1, **caractérisé en ce que** lesdits moyens de mémorisation (5) contiennent des données relatives au tracé et/ou au relief et/ou à la longueur de chacun des tronçons de parcours s'étendant entre chacune desdites bornes (...n-1, n, n+1 ...) et la borne suivante.

3. Système suivant l'une quelconque des revendications 1 et 2, **caractérisé en ce qu'**il comprend également, à bord dudit véhicule (V), des moyens (2) pour déterminer la charge actuelle présente dans ladite source d'énergie rechargeable (1) et **en ce que** lesdits moyens de calcul (4) engendrent ledit signal représentatif (quf) en fonction de la différence entre la quantité d'énergie nécessaire pour satisfaire lesdits besoins er énergie (bse) et la quantité d'énergie (ec) présente dans ladite source d'énergie rechargeable (1).

4. Système suivant l'une quelconque des revendications précédentes, **caractérisé en ce qu'**il comprend également des moyens (3) pour relever une plage de valeurs de charge correspondant au meilleur fonctionnement de ladite source d'énergie rechargeable (1) et **en ce que** lesdits moyens de calcul (4) déterminent ledit signal représentatif (quf) en fonction de ladite plage de valeurs de charge.

5. Système de gestion suivant l'une quelconque des revendications précédentes, **caractérisé en ce que** lesdits moyens de localisation (6) comprennent un dispositif de localisation par satellite de type GPS.

6. Système de gestion suivant quelconque des revendications précédentes, **caractérisé en ce que** lesdits moyens de localisation (6) sont agencés pour localiser ledit véhicules à partir des coordonnées topographiques bornes (... n-1,n,n+1...).

7. Système de gestion suivant quelconque des revendications précédentes, **caractérisé en ce qu'**il comprend à bord véhicule (V), un dispositif d'affichage (10) agencé pour afficher la quantité totale d'énergie présente dans ladite source d'énergie, et/ou la quantité d'énergie nécessaire pour atteindre ladite borne aval (n) et/ou la quantité d'énergie nécessaire pour atteindre ladite borne suivante (n+1).

8. Système de gestion suivant la revendication 7, **caractérisé en ce que** ledit dispositif d'affichage (10) est également agencé pour afficher, lors de la recharge de ladite source d'énergie (1), le temps restant à s'écouler avant la fin de la recharge.

9. Système de gestion suivant quelconque des revendications 7 et 8, **caractérisé en ce que** ledit dispositif d'affichage (10) est également agencé pour afficher de recharge de ladite source d'énergie une autorisation de démarrage après achèvement de la recharge.

10. Système de gestion suivant l'une quelconque des revendications précédentes, **caractérisé en ce qu'**il comprend également, situés dans une station centrale (S1) gestionnaire dudit parcours, des moyens pour analyser la circulation sur ledit parcours et pour envoyer les données correspondantes audit véhicule (V), et **en ce que** lesdits moyens de calcul (4) sont également agencés pour déterminer lesdits besoins en énergie (bse) en fonction desdites données de circulation.

## Claims

1. System for managing the charge of a rechargeable power source (1) which is provided on board at least one electrically driven vehicle (V), possibly of the hybrid type, said vehicle requiring to follow a predetermined route (VC) along which there are provided charging terminals (... n-1, n, n+1...),
said system being **characterised in that** it comprises in combination:
i n said vehicle (V):
- calculation means (4, 17) in order, during the execution of a journey between an upstream terminal (n-1) and a downstream terminal (n) which are situated on said route (VC), to determine the power requirements (bse) of said vehicle (V) so that it can execute the 1 section of route leading from said downstream terminal (n) towards the following terminal (n+1),
- means for generating a signal (quf) which is representative of the quantity of power which is required to satisfy these requirements,
- first communication means (8) for communicating said representative signal (quf) at least to said downstream terminal (n),
- means (6) for locating said vehicle relative to said terminals (n-1, n, n+1),
- storage means (5) in which there is disposed at least one map which represents the topographical characteristics of said route,
- means (4, 16) in order, as a function of the location of said vehicle, to extract from said storage means (5) the topographical characteristics of said section of route, and
- said calculation means (4; 17) determining said power requirements (bse) as a function of the topographical characteristics of said section;
and in each of said terminals (n-1, n, n+1):
- second communication means (9) for receiving said representative signal (quf) and
- means (13) in order, in response to this representative signal, to send the corresponding charge power towards said rechargeable source (1) in said vehicle (V).

2. Management system according to claim 1, **characterised in that** said storage means (5) contain data relating to the path and/or to the relief and/or to the length of each of the sections of route extending between each of said terminals (... n-1, n, n+1...) and the following terminal.

3. System according to any of the claims 1 and 2, **characterised in that** it likewise comprises, on board said vehicle (V), means (2) for determining the current charge which is present in said rechargeable power source (1) and **in that** said calculation means (4) generate said representative signal (quf) as a function of the difference between the quantity of power which is required to satisfy said power requirements (bse) and the quantity of power (ec) which is present in said rechargeable power source (1).

4. System according to any of the preceding claims, **characterised in that** it likewise comprises means (3) for recording a range of charge values which correspond to the best functioning of said rechargeable power source (1) and **in that** said calculation means (4) determine said representative signal (quf) as a function of said range of charge values.

5. Management system according to any of the preceding claims, **characterised in that** said locating means (6) comprise a device for locating by satellite of the GPS type.

6. Management system according to any of the preceding claims, **characterised in that** said locating means (6) are designed to locate said vehicle from the topographical terminal coordinates (...n-1, n, n+1...).

7. Management system according to any of the preceding claims, **characterised in that** it comprises, on board the vehicle (V), a display device (10) which is designed to display the total quantity of power which is present in said power source, and/or the quantity of power which is required to reach said downstream terminal (n) and/or the quantity of power which is required to reach said following terminal (n+1).

8. Management system according to claim 7, **characterised in that** said display device (10) is likewise designed to display, during recharging of said power source (1), the time still to elapse before the end of recharging.

9. Management system according to any of the claims 7 and 8, **characterised in that** said display device (10) is likewise designed to display, from recharging of said power source, an authorisation to move off after completion of recharging.

10. Management system according to any of the preceding claims, **characterised in that** it likewise comprises, situated in a central station (ST) which manages said route, means for analysing the traffic on said route and for sending corresponding data to said vehicle (V), and **in that** said calculation means (4) are likewise designed to determine said power requirements (bse) as a function of said traffic data.

## Patentansprüche

1. System zur Regulierung der Ladung einer wiederaufladbaren Energiequelle (1), die an Bord mindestens eines elektrisch oder gegebenenfalls hybrid angetriebenen Fahrzeuges (V) vorgesehen ist, wobei das genannte Fahrzeug einer festgelegten Fahrstrecke (VC) folgen muss, auf der Ladestellen (...n-1, n, n+1...) vorgesehen sind,
wobei das genannte System **dadurch gekennzeichnet ist, dass** es miteinander kombiniert umfasst:
im genannten Fahrzeug (V):
- Rechenmittel (4, 17), um während einer Fahrt zwischen einer früheren Ladestelle (n-1) und einer späteren Ladestelle (n) auf der genannten Fahrstrecke (VC) den Energiebedarf (bse) des genannten Fahrzeugs (V) zu bestimmen, damit es den 1 Fahrstreckenabschnitt durchfahren kann, der von der genannten späteren Ladestelle (n) zur folgenden Ladestelle (n+1) führt,
- Mittel zur Erzeugung eines Signals (quf), das den für die Deckung dieses Bedarfs erforderlichen Energiebetrag angibt,
- erste Kommunikationsmittel (8), um das genannte Signal (quf) mindestens an die genannte spätere Ladestelle (n) zu übermitteln,
- Mittel (6) zur Ortsbestimmung des genannten Fahrzeugs relativ zu den genannten Ladestellen (n-1, n, n+1),
- Speichermittel (5), in denen mindestens ein Satz Kartendaten gespeichert ist, der die topographischen Merkmale der genannten Fahrstrecke enthält,
- Mittel (4, 16), um den genannten Speichermitteln (5) in Abhängigkeit vom bestimmten Ort des genannten Fahrzeugs die topographischen Merkmale des genannten Fahrstreckenabschnitts zu entnehmen,
- wobei die genannten Rechenmittel (4; 17) den genannten Energiebedarf (bse) in Abhängigkeit von den topographischen Merkmalen des genannten Streckenabschnittes bestimmen;
und in jeder der genannten Ladestellen (n-1, n, n+1):
- zweite Kommunikationsmittel (9), um das genannte Signal (quf) zu empfangen und
- Mittel (13) zur Abgabe der entsprechenden Ladungsenergie an die genannte wiederaufladbare Quelle (1) im genannten Fahrzeug (V) in Reaktion auf dieses Signal.

2. Regulierungssystem nach Patentanspruch 1, **dadurch gekennzeichnet, dass** die genannten Speichermittel (5) Daten enthalten, die sich auf den Streckenverlauf und/oder das Höhenprofil und/oder die Länge jedes der Fahrstreckenabschnitte, die zwischen jeder der genannten Ladestellen (...n-1, n, n+1...) und der folgenden Ladestelle liegen, beziehen.

3. System nach irgendeinem der Patentansprüche 1 und 2, **dadurch gekennzeichnet, dass** es außerdem an Bord des genannten Fahrzeugs (V) Mittel (2) zur Bestimmung der augenblicklich in der genannten wiederaufladbaren Energiequelle (1) vorhandenen Ladung umfasst und dadurch, dass die genannten Rechenmittel (4) das genannte Signal (quf) in Abhängigkeit von der Differenz zwischen dem zur Deckung des genannten Bedarfs erforderlichen Energiebetrag (bse) und dem in der genannten wiederaufladbaren Energiequelle (1) vorhandenen Energiebetrag (ec) erzeugen.

4. System nach irgendeinem der vorangehenden Patentansprüche, **dadurch gekennzeichnet, dass** es ebenfalls Mittel (3) zur Bestimmung eines Ladungsbetragsbereichs, der dem besten Arbeitsbereich der genannten wiederaufladbaren Energiequelle (1) entspricht, umfasst und dadurch, dass die genannten Rechenmittel (4) das genannte Signal (quf) in Abhängigkeit vom genannten Ladungsbetragsbereich bestimmen.

5. Regulierungssystem nach irgendeinem der vorangehenden Patentansprüche, **dadurch gekennzeichnet, dass** die genannten Ortungsmittel (6) eine Satellitenortungsvorrichtung des Typs GPS umfassen.

6. Regulierungssystem nach irgendeinem der vorangehenden Patentansprüche, **dadurch gekennzeichnet, dass** die genannten Ortungsmittel (6) derart eingerichtet sind, dass sie das genannte Fahrzeug aufgrund von topographischen Koordinaten der Ladestellen (...n-1, n, n+1...) orten.

7. Regulierungssystem nach irgendeinem der vorangehenden Patentansprüche, **dadurch gekennzeichnet, dass** es an Bord des Fahrzeugs (V) eine Anzeigevorrichtung (10) umfasst, die dafür eingerichtet ist, den gesamten Energiebetrag in der genannten Energiequelle und/oder den zum Erreichen der genannten späteren Ladestelle (n) erforderlichen Energiebetrag und/oder den zum Erreichen der genannten folgenden Ladestelle (n+1) erforderlichen Energiebetrag anzuzeigen.

8. Regulierungssystem nach Patentanspruch 7, **dadurch gekennzeichnet, dass** die genannte Anzeigevorrichtung (10) auch dafür eingerichtet ist, während des Aufladens der genannten Energiequelle (1) die Zeit anzuzeigen, die bis zum Ende des Aufladens noch verstreichen muss.

9. Regulierungssystem nach irgendeinem der Patentansprüche 7 und 8, **dadurch gekennzeichnet, dass** die genannte Anzeigevorrichtung (10) ebenfalls dafür eingerichtet ist, beim Aufladen der genannten Energiequelle eine Starterlaubnis nach Beenden des Ladens anzuzeigen.

10. Regulierungssystem nach irgendeinem der vorangehenden Patentansprüche, **dadurch gekennzeichnet, dass** es ebenfalls in einer Zentrale (ST) zur Überwachung der genannten Fahrstrecke Mittel zum Analysieren des Verkehrs auf der genannten Fahrstrecke und zum Senden der entsprechenden Daten an das genannte Fahrzeug (V) umfasst, und dadurch, dass die genannten Rechenmittel (4) auch dafür eingerichtet sind, den genannten Energiebedarf (bse) in Abhängigkeit von den genannten Verkehrsdaten zu bestimmen.
